## Europäisches Patentamt
## European Patent Office
## Office européen des brevets

(11) Publication number: **0 033 968**
**B1**

(12) **EUROPEAN PATENT SPECIFICATION**

(45) Date of publication of patent specification: **03.07.85**

(21) Application number: **81100897.8**

(22) Date of filing: **09.02.81**

(51) Int. Cl.⁴: **G 03 C 5/04,** G 11 C 13/00,
G 03 C 5/40

(54) Method for optical recording of information in a digital system.

(30) Priority: **11.02.80 US 120036**

(43) Date of publication of application:
**19.08.81 Bulletin 81/33**

(45) Publication of the grant of the patent:
**03.07.85 Bulletin 85/27**

(84) Designated Contracting States:
**BE DE GB**

(56) References cited:
FR-A-2 449 322
FR-A-2 461 324
US-A-3 314 073
US-A-3 579 338

(73) Proprietor: **FUJI PHOTO FILM CO., LTD.**
**210 Nakanuma Minami Ashigara-shi**
**Kanagawa 250-01 (JP)**

(72) Inventor: **Hashiue, Masakazu**
**No. 26-30, Nishi Azabu 2-chome Minato-ku**
**Tokyo (JP)**
Inventor: **Ochiai, Koji**
**No. 26-30, Nishi Azabu 2-chome Minato-ku**
**Tokyo (JP)**

(74) Representative: **Patentanwälte Dipl.-Ing. A.**
**Grünecker, Dr.-Ing. H. Kinkeldey, Dr.-Ing. W.**
**Stockmair,**
**Dr. rer. nat. K. Schumann, Dipl.-Ing. P.H. Jakob,**
**Dr. rer. nat. G. Bezold Maximilianstrasse 58**
**D-8000 München 22 (DE)**

Courier Press, Leamington Spa, England.

## Description

The invention is related to a method for optical recording of information in a digital system comprising the steps of exposing a light responsive layer formed on a substrate to a light input digitally modulated by the information.

Within the prior art, basic concepts of optical information storage and playback are well documented. A variety of systems have been proposed and described in the literature. For example, US—A—3 501 586; 3 624 284; 3 795 902; 3 806 643 all relate to various systems utilizing optical scanners for digital information storage and playback. Basic descriptons of such systems are found for example, in "Optical Engineering, Vol. 15, No. 1, January/February 1976, Optical Digital Recording", J.T. Russell. Extensive descriptions of other basic systems are found in "Optical Readout of Video Disc", IEEE Transactions on Consumer Electronics, November 1976, p. 304; "Optical Disc Systems Emerge", IEEE Spectrum, August 1978, p. 20. Other examples of the prior art in optical information storage and playback are found in "The Philips 'VLP' System," Philips Tech. Rev. Vol. 33, No. 7, 1973, J. Compaan et al; "A Review of the MCA Disco Vision System," *J. SMPTE*, Vol. 83, July 1974, K. Broadbent; and SPIE Preceeding, Vol. 123 edited for Optical Storage Materials and Methods, p. 104 (1977), "An Optical Disc Data Recorder," R. McFarlane et al.

In their most basic form optical recording systems utilize laser light which both records and plays back from a single surface. Essentially, in most systems, laser light is passed from a source to a modulator which modulates the beam by rotation of its polarization or by acoustic deformation of the modulator medium in accordance with an applied voltage. In other systems, the laser output is modulated by changing the electrical input signal to the laser source. Other light conditioning then takes place such as attenuation which is used to reduce intensity during playback mode. Various scanning systems are used, such as the rotating scanning system as in the Russell patents or other techniques where the beam is either expanded or focused to fill an area on the optical disc. The disc may be rotated or translated or relative motion can be effected by combination of those actions with movement of the lens. The laser light focused by the focusing lens is either used to record a track or is modulated during the playback process by an existing track and is then reflected along an optical path to a detector.

Although a variety of techniques have been employed to demonstrate the feasibility of optical recording utilizing a laser source, numerous problems remain which prevent wide commercial acceptance of this technique. One such key area of research is a suitable recording material. As indicated in prior art, a number of candidates exist although currently Bismuth or Tellurium are the materials of choice for vapor deposition on a substrate for optical plates. Essentially, two techniques are utilized. In a first, utilizing a quantum technique of recording photographic, photoresist or photochromatic materials are used. In a second technique utilizing ablative thin films, the recording mechanism is essentially a thermal technique utilizing the absorbed energy from the focused laser beam as a localized heat source that by melting or vaporization changes the magnetization or degree of reflectivity of the surface.

The prior art "Optical Disc Systems Emerge" article lists a variety of candidates for optical recording materials. These candidates are listed as existing from photographic materials to electro-optic materials. As set forth in that article, candidates have been identified and selected based on various criteria. The first is to compare resolution as a function of material sensitivity. As set forth in the article, an acceptable candidate to be used as a recording material should have resolution capability of less than 1—μm to satisfy requirements of packing density. Exposure sensitivity is also considered so that the material utilized should permit the use of moderate to low power recording lasers yet be sufficiently insensitive in the case of repeated playback not to deteriorate the record. As set forth therein, for a 1—μm spot which is recorded at 10—MHz an exposure of $10^{-2}$ J/cm$^2$ can be achieved at 1 mW power level.

Considering these requirements, this prior art article concludes that exposure should be within the range of $10^{-2}$—$10^{-3}$J/cm$^2$ with a resolution of greater than $10^3$ Bits/mm. Based on this criteria coupled with the fact that rapid correction of recorded information is necessary, the article concludes that photographic and photoresistant materials are not suitable candidates for recording materials.

Accordingly, the prior art has moved in the direction of utilizing either single layer plates utilizing low melting point metal with low thermodifussitivity or multilayer composite structures. In the case of single layer systems, candidate metal include Indium, Lead, Tellurium and Bismuth. As indicated herein, Bismuth and Tellurium appear to be the materials of choice.

In the case of multilayer coatings, reflectivity from the top surface of the recording medium can be eliminated and the pit formation process, that is the technique of recording digital data onto the recording medium can be designed to disrupt anti-reflection conditions. Such multilayer structures have been proposed utilizing either bilayer or trilayer configurations. These configurations tend to utilize aluminum reflective surfaces between thermal barriers and titanium as the recording layer. According, the prior art has rejected the use of the photographic materials and has moved in the direction of expensive single layer techniques or complicated composite layer systems which are relatively low in sensitivity. Reflective readout is preferred because of compactness in the size of the playback unit and simplicity in detection of the focusing condition.

GB-A-2 042 200A discloses a recording medium which is obtained by baking a silver halide emulsion material after it is photographically processed.

Within the prior art, vacuum deposited thin layer and baked silver halide emulsion material have so low sensitivity that the duplicates cannot be made easily with these materials by optical printing methods.

Within the prior art, it is known that some photographic materials utilizing silver halide emulsions will exhibit metallic gloss images when they are properly physically developed. Examples of such processes are provided in US—A—3 579 338. This patent relates to a process of making a metal-glossy image from an image which is composed of silver halide. This patented process relates to a variable contrast projection system as described in US—A—3 475 096 in which an illuminating light beam is applied to the developed image for transmission and another beam for reflection from said image which are then combined with each other and projected on a screen. These patents, while describing a projection process and a process for creation of the metal-glossy image utilizing silver halide, do not recognize or indicate the suitability of the glossy image to the area of optical digital recording and playback in which reflective readout is employed. It is also noted that the basic technology in information reproduction by conventional projection systems is quite different from that used in optical digital recording or playback in which electronic signal processing is employed.

The invention as claimed is intended to solve the problem as to how information may be optically recorded in a digital system at low cost with high accuracy and high packing density.

The solution of this problem is characterized in that a silver halide emulsion layer is used as the light responsive layer which silver halide emulsion layer is developed after its exposure to the digitally modulated light input such that a reflective glossy silver pattern with a light reflection of at least ten percent is formed.

The method according to the invention uses as recording medium, a silver halide emulsion layer formed on a substrate. By proper developing, a silver image is formed in the silver halide emulsion layer and by physical development, the metallic silver is formed at the top of the emulsion layer. In terms of light reflection, although only several percent reflection of incident light occurs from the areas where no silver is present yet, a reflectivity of ten percent or more but preferably, thirty percent or more is observed in the area where the metallic glossy silver is formed.

Using a silver halide emulsion layer on a substrate in accordance with the method of the invention is inexpensive yet highly accurate and allows for high packing densities. Additionally, the silver halide emulsion layer has a high sensitivity sufficient to record digital information with a low to moderate powered laser. Furthermore, the recording medium used with the method according to the invention is relatively insensitive to repeated playback mode operation of the recorded information without deteriorating the quality of the data recorded.

Preferred emdodiments of the invention are claimed by the sub-claims.

One of these preferred embodiments is characterized in that a protective layer is formed on top of the silver halide emulsion layer. If such a protective layer is used the metallic silver is formed by the physical development at the top of the protective layer or at the boundary of the protective layer and the silver halide emulsion layer or at both the top and boundary of the protective layer. The protective layer is utized to increase resistance to scratching and to eliminate the formation of contaminated particles such as dust on the silver halide emulsion layer.

Embodiments for carrying out the invention are described in detail below with reference to drawings in which:

Figure 1 is a cross-sectional view of a segment of the recording medium used with the method according to the invention, and

Figure 2 is a graphical representation showing the relative output of light as a function of the areas where a glossy metallic silver is formed representing a track.

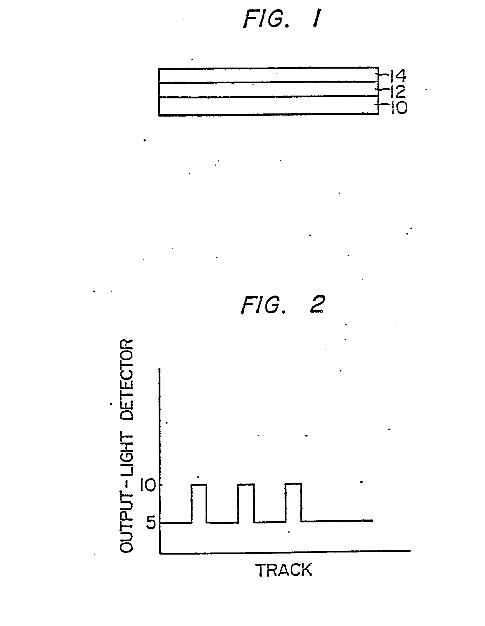

Referring now to Fig. 1, a cross-section of the optical recording medium used in this invention is shown. The medium comprises a substrate 10 which may be a glass or plastic base material. Typical plastic base materials are polyethylene terephthalate (PET), polymethyl methacrylate (PMMA) and polycarbonate (PK). It is important for substrates to demonstrate dimensional and thermal stability for accurate, high density digital recording. In a known manner, emulsion layer 12 made of silver halide material is deposited on the substrate. The emulsion layer is exposed to form a latent image by means of a low power laser for data recording. Subsequent development achieves the degree of reflectivity necessary for accurate readout. Development of the silver halide emulsion layer is done in accordance with the method taught in the US—A—3 579 338. Another method to attain metallic glossy-silver halide emulsion layers yield metallic silver images when silver images are exposed after development to the atmosphere in the presence of oxidizing vapors. One example of such an oxidizing agent is $H_2O_2$. Following exposure to modulated light for data recording, a photographic material composed of silver halide emulsion is developed with a developer such as FUJI PAPITOL®; commercially available from FUJI Photo Film Co., Ltd. The material is then held in a confined box of 125 liters containing 20 ml of 8% aqueous solution of $H_2O_2$. After 24 hours at room temperature with 80—90% relative humidity, a metallic glossy silver image is observed on the photographic material.

Fine grain silver halide particles in the range of the 0.01 to 0.1 µm in diameter are suitable for use in this application. That is, in order to achieve necessary resolution, in excess of $10^{+3}$ Bits/mm such a fine grain particle can be used. Candidate materials are Kodak® 120—02 and type 649F materials. The materials are compatible with Ar, He-Ne and Krypton laser sources.

The protective layer 14 provides necessary insurance against scratching and contamination of the emulsion layer. The protective layer is composed of a gelatin, as is widely used in conventional photographic materials. However, it is optional and in some instances may be disregarded.

The emulsion layer is exposed by an appropriate low power laser for data recording to create a latent image. Formation of matallic glossy silver occurs during the development in the manner consistently taught by US—A—3 579 338 or in the manner in which recording material is exposed after development to the atmosphere in the presence of oxidizing agents.

Also, following exposure to create the latent image, the emulsion layer may be exposed to a sulphur compound to induce physical development of the nuclei in the layer. This is followed by conventional photographic development using typical wet processing such as developing, fixing, rising and drying.

As a result, the areas where exposure took place exhibit a glossy silver when developed, that is a metallic image. As shown in Fig. 2, light reflection in excess of 10% exists in the areas where the glossy metallic silver is formed, which areas represent a track while the remainder demonstrates light reflection in the order of 4 to 5%.

The glossy silver image may also be obtained by baking the material after conventional processing. A photographic plate in which silver halide emulsion with mean grain size of 0.05 μm is coated on a glass plate and is exposed to modulated light to create the latent image and processed by conventional photographic development, fixing, rinsing and drying. The processed plate is held in an electric-powered oven maintained at 400°C. After 10 minutes, a metallic glossy silver image is observed on the photographic plate. A metallic glossy silver image is also observed when a plate is baked for 6 to 10 minutes at 380° to 400°C.

Playback of such a developed record follows techniques which are established in the art. Essentially, a low power level laser source is used to illuminate a portion of the record. The light is focused into a very narrow, well defined spot as the record moves relative to the lens. The primary scanning is achieved by either rotating the record or rotating the scanning lens. The reflected image is directed back through the lens onto a beam splitter or the like and is then diverted onto a light detector.

As a variation of this invention, it is possible to deposit reflective materials other than silver onto the silver image which has been obtained by the processing as set forth herein. Accordingly, reflectivity can be further enhanced by subsequent deposition of materials onto the already processed silver image.

It is also possible to make a duplicate of the recording produced by the method of this invention with a practical ease, because the silver halide emulsion layer is sensitive enough to respond to light exposure in popular apparatus widely used for optical recording.

It is also possible, as a variation of this invention, to reproduce the recorded information from the record which is processed to produce metallic glossy silver where no exposure is given and no metallic silver where the exposure is given by using photographic reversal processing.

Other modifications of this invention are possible without departing from the essential scope thereof.

**Claims**

1. A method for optical recording of information in a digital system comprising the steps of exposing a light responsive layer formed on a substrate to a light input digitally modulated by the information, characterized in that a silver halide emulsion layer is used as the light responsive layer, which silver halide emulsion layer is developed after its exposure to the digitally modulated light input such that a reflective glossy silver pattern with a light reflection of at least 10% is formed.

2. The method according to claim 1, characterized in that a silver halide emulsion layer is used comprising halide particles in the range of 0.01 to 0.1 μm in average diameter.

3. The method according to claim 1 or 2, characterized in that a protective layer is formed on top of the silver halide emulsion layer.

**Revendications**

1. Procédé pour l'enregistrement optique d'informations dans un système numérique, ce procédé comprenant l'étape qui consiste à exposer une couche photosensible formée sur un substrat à une entrée sous la forme de lumière modulée numériquement par les informations, caractérisé en ce qu'on utilise, comme couche photosensible, une couche d'émulsion à l'halogénure d'argent qui, après son exposition à l'entrée de lumière modulée numériquement, est développée de façon à former une image argentique brillante et réfléchissante ayant un pouvoir de réflexion de la lumière d'au moins 10%.

2. Procédé selon la revendication 1, caractérisé en ce qu'on utilise une couche d'émulsion à l'halogénure d'argent comprenant des particules d'halogénure dont le diamètre moyen se situe dans l'intervalle allant de 0.01 à 0,1 μm.

3. Procédé selon la revendication 1 ou 2, caractérisé en ce qu'une couche protectrice est formée par-dessus la couche d'émulsion à l'halogénure d'argent.

**Patentansprüche**

1. Verfahren zur optischen Aufzeichnung von Informationen in einem Digitalsystem, welches die Schritte umfaßt, daß eine auf einem Substrat gebildet, auf Licht ansprechende Schicht mit durch die Information digital moduliertem Eingangslicht belichtet wird, dadurch gekennzeichnet, daß eine Silberhalogen-Emulsionschicht als die auf Licht ansprechende Schicht verwendet wird, wobei die Silberhalogen-Emulsionsschicht nach ihrer Belichtung mit dem digital moduliertem Eingangslicht derart entwickelt wird, daß ein reflektierrendes, glänzendes Silbermuster mit einer Lichtreflektion von wenigstens 10 Prozent gebildet wird.

2. Verfahren nach Anspruch 1, dadurch gekennzeichnet, daß eine Silberhalogen-Emulsionsschicht verwendet wird, die Halogenteilchen mit einem mittleren Durchmesser in dem Bereich von 0,01 bis 0.1 µm umfaßt.

3. Verfahren nach Anspruch 1 oder 2, dadurch gekennzeichnet, daß eine Schutzschicht oben auf der Silberhalogen-Emulsionsschicht ausgebildet wird.

## FIG. 1

## FIG. 2